# EUROPEAN PATENT APPLICATION

(11) **EP 1 753 241 A2**
(43) Date of publication of application: **14.02.2007**
(21) Application number: 06252776.7
(22) Date of filing: 30.05.2006
(51) Int. Cl.: H04N 7/173

(54) **Information processing device, method of information processing, and program**

(30) Priority: 31.05.2005 JP 2005159398
(71) Applicant: SONY CORPORATION, Tokyo 141 (JP)
(72) Inventor: Tsunoda, Tomohiro c/o Intellectual Property Dep., Shinagawa-ku Tokyo 141 (JP)
(74) Representative: Turner, James Arthur

(57) **Abstract**

There is provided an information processing device presenting a recommendable target which matches user preference to the user, which includes: selection means which selects the recommendable target to be presented to the user, on the basis of preliminarily acquired preference information of the user; presentation means which presents to the user recommendation information containing the recommendable target selected by the selection means, and features of the recommendable target; entry means which allows entry of an evaluation by the user on the recommendation information with respect to the recommendable target presented by the presentation means; and update means which updates the preference information of the user based on the evaluation entered through the entry means corresponding to the recommendation information.

## Description

The present invention relates to an information processing device, a method of information processing, and a program, and in particular (though not exclusively) to an information processing device, a method of information processing, and a program preferably used for a case where an object such as television program corresponded to user preference is recommended to the user.

There has been known a system of extracting user preference (favorite performer, favorite genre, etc.) based on history of searching, recording reservation, and viewing by the user with respect to television programs, detecting television programs supposedly corresponded to the user preference (for example, a television program having the cast including the user's favorite actor) out of those to be broadcasted, and recommending recording or viewing of the program to the user.

There has also been known a system presenting causes for recommendation to the user, or acquiring a user's evaluation with respect to the recommended television programs (whether the user was fond of them or not) and reflecting the results to preference information of the user, in addition to recommendation of television programs.

There has still also been known an invention, aimed at coping with changes in the user preference, presenting items of lower user preference, and updating the preference information of the user depending on user's reactions to the presentation as disclosed in Japanese Patent Application Publication (KOKAI) 2004-343320, for example).

For a case where the user only poorly evaluated the recommended television programs (that is, for a case where the recommended television programs were not preferred by the user), the related art system, acquiring an evaluation of the user with respect to the recommended television programs, and reflecting the results to preference information of the user, in addition to presentation of television programs corresponded to the user preference, has updated the user preference by lowering the evaluation for all metadata (title, genre, cast, etc.) with respect to the recommended television programs.

As a consequence, the above-described related art system did no more recommend the television programs poorly evaluated by the user, but sometimes raised a difficulty in recommending other television programs in which the user's favorite performers take part.

It is now assumed that, for example, a performer "Haruko Nogiwa" is highly evaluated in the preference information of the user, and that a variety program "SNAP×SNAP" in which the performer "Haruko Nogiwa" takes part is recommended to the user on the basis of the evaluation. Upon this proposal, for a case where the user evaluated the recommended program "SNAP×SNAP" as "not my taste", merely for the reason that the user was not fond of variety program, lower evaluation is given to all metadata (program title "SNAP×SNAP", performer "Haruko Nogiwa", performer "SNAP", genre "variety", etc.) with respect to the program "SNAP×SNAP". As a consequence, the variety program "SNAP×SNAP" would never be recommended thereafter, but this sometimes resulted in a difficulty of recommending other programs (drama, etc.) in which the performer "Haruko Nogiwa" takes part.

The present invention was conceived after considering the above-described situation, aimed at acquiring not only a user's evaluation on a recommendable target such as a recommended television program, but acquiring also a user's evaluation on the metadata corresponded to the recommendable target, so as to reflect them to the user's preference information.

Various respective aspects and features of the invention are defined in the appended claims. Features from the dependent claims may be combined with features of the independent claims as appropriate and not merely as explicitly set out in the claims.

An information processing device according to an embodiment of the present invention includes selection means, presentation means, entry means, and update means. The selection means selects a recommendable target to be presented to the user, on the basis of preliminarily acquired preference information of the user. The presentation means presents to the user recommendation information containing the recommendable target selected by the selection means, and features of the recommendable target. The entry means allows entry of an evaluation by the user on the recommendation information with respect to the recommendable target presented by the presentation means. The update means updates the preference information of the user on the basis of the evaluation entered through the entry means corresponding to the recommendation information.

An information processing device according to the embodiment of the present invention may further include extraction means which extracts contributive information which contributed to selection made by the selection means, in which the recommendation information may contain the contributive information extracted by the extraction means.

The extraction means may be configured so as to extract, out of feature information of the recommendable target, an item largely contributed to the selection of the recommendable target by the selection means as the contributive information, and the update means may alter a score of an item corresponded to the contributive information, out of the preference information of the user.

The presentation means may be configured so as to present a pop-up allowing entry of the evaluation by the user on the contributive information, when the user selected the contributive information, and the entry means may allow entry of an evaluation by the user on the recommendation information, to the pop-up presented by the presentation means.

A method of information processing according to another embodiment of the present invention includes a selecting step, a presenting step, an allowing entry step, and an updating step. The selecting step is for selecting a recommendable target to be presented to a user, on the basis of preliminarily acquired preference information of the user. The presenting step is for presenting to the user recommendation information containing the recommendable target selected by a processing in the selecting step, and features of the recommendable target. The allowing entry step is for allowing entry of an evaluation by the user on the recommendation information with respect to the recommendable target presented by a processing in the presenting step. The updating step is for updating the preference information of the user on the basis of the evaluation entered through a processing in the allowing entry step, corresponding to the recommendation information.

A program according to another embodiment of the present invention allows a computer to execute processing which includes a selecting step, a presenting step, an allowing entry step, and an updating step. The selecting step is for selecting the recommendable target to be presented to the user, on the basis of preliminarily acquired preference information of the user. The presenting step is for presenting to the user recommendation information containing the recommendable target selected by a processing in the selecting step, and features of the recommendable target. The allowing entry step is for allowing entry of an evaluation by the user on the recommendation information with respect to the recommendable target presented by a processing in the presenting step. The updating step is for updating the preference information of the user on the basis of the evaluation entered through a processing in the allowing entry step corresponding to the recommendation information.

In the present invention, a recommendable target to be presented to a user is selected depending on preliminarily acquired preference information of the user, and recommendation information containing the selected recommendable target, and features of the recommendable target are presented to the user. An evaluation by the user on the recommendation information with respect to the presented recommendable target is then entered, and the user preference information is updated depending on the entered evaluation.

According to the present invention, it is made possible to acquire not only a user's evaluation with respect to the recommendable target such as the recommended television program, but also the user's evaluation with respect to the metadata corresponded to the recommendable target, so as to reflect them to the user preference information.

The invention will now be described by way of example with reference to the accompanying drawings, throughout which like parts are referred to by like references, and in which:
FIG. 1 is a block diagram showing an exemplary configuration of a recommendation system applied with the present invention;
FIG. 2 is a drawing showing an example of a recommendable target information database shown in FIG. 1;
FIG. 3 is a drawing showing an example of a preference information database shown in FIG. 1;
FIG. 4 is a drawing showing an exemplary application of the recommendation system shown in FIG. 1;
FIG. 5 is a drawing showing an exemplary application of the recommendation system shown in FIG. 1;
FIG. 6 is a drawing showing an exemplary application of the recommendation system shown in FIG. 1;
FIG. 7 is a drawing showing an exemplary display of a presentation screen displayed on the display section shown in FIG. 1;
FIG. 8 is a drawing showing an exemplary display of a pop-up displayed as being overlaid on the presentation screen;
FIG. 9 is a drawing showing another exemplary display of a pop-up displayed as being overlaid on the presentation screen;
FIG. 10 is a drawing showing a small screen displayed as being overlaid on the presentation screen;
FIG. 11 is a flow chart explaining preference information updating by the recommendation system;
FIG. 12 is a flow chart explaining a processing in step S9 in FIG. 11; and
FIG. 13 is a block diagram showing an exemplary configuration of a general-purpose personal computer.

Paragraphs below will describe embodiments of the present invention, in which relations between the constituent features described in the claims and specific examples described in the embodiments of the invention are given as below. The description herein is given for the purpose of confirming that the specific examples supporting the invention described in the claims are surely described in the embodiments of the invention. It is, therefore, to be understood that any specific examples, described in the embodiments of the invention but not described herein as those corresponding to the constituent features, should exist, this does not mean that the specific examples do not correspond to the constituent features. On the contrary, even if any specific examples should be described herein as those corresponded to the constituent features, this does not mean that the specific examples do not correspond with any constituent features other than the above-described constituent features.

It is further to be understood that the description herein does not mean that all of the invention corresponded to the specific examples described in the embodiments of the invention are described in the claims. In other words, the description does not deny existence of any inventions corresponded to the specific examples described in the embodiments of the invention but not described in the claims of this patent application, that is, existence of any inventions possibly divided or added by amendment in the future.

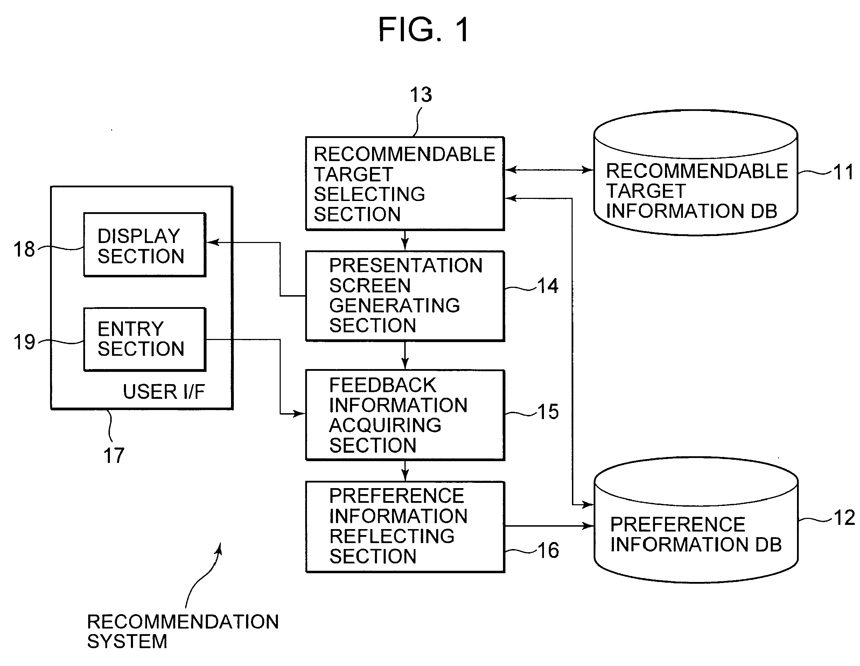

The information processing device according to an embodiment of the present invention, that is, for example, recommendation system 1 shown in FIG. 1 includes a selection unit; a presentation unit; an entry unit; and an update unit. The selection unit is, for example, a recommendable target selecting section 13 shown in FIG. 1, and selects a recommendable target, such as television programs, digital contents, books, to be presented to the user, depending on preliminarily acquired preference information about the user. The presentation unit is, for example, a presentation screen generating section 14 shown in FIG. 1, and presents to the user recommendation information containing the recommendable target selected by the selection unit, and features of the recommendable target. The entry unit is, for example, an entry section 19 shown in FIG. 1, and allows entry of an evaluation by the user on the recommendation information with respect to the recommendable target presented by the presentation unit. The update unit is, for example, a preference information reflecting section 16 shown in FIG. 1, and updates the preference information of the user based on the evaluation entered through the entry unit, corresponding to the recommendation information.

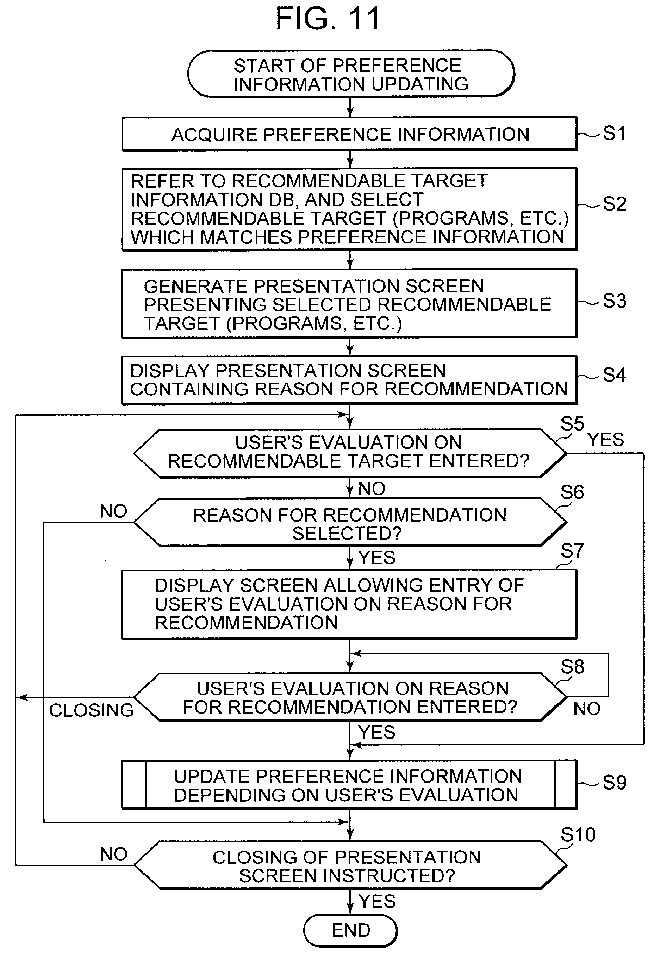

The method of information processing according to another embodiment of the present invention includes a selecting step; a presenting step; an allowing entry step; and an updating step. The selecting step is, for example, step S2 in FIG. 11 and for selecting a recommendable target to be presented to a user, depending on preliminarily acquired user preference information. The presenting step is, for example, steps S3, S4 in FIG. 11 and for presenting to the user recommendation information containing the recommendable target selected by a processing in the selecting step, and features of the recommendable target. The allowing entry step is, for example, steps S5, S8 in FIG. 11 and for allowing entry of an evaluation by the user on the recommendation information with respect to the recommendable target presented by a processing in the presenting step. The updating step is, for example, step S9 in FIG. 11 and for updating the preference information of the user on the basis of the evaluation entered through a processing in the allowing entry step, corresponding to the recommendation information.

It is to be noted herein that correlation between the constituent features described in the claim of the present invention related to a program and the specific examples in the embodiments of the invention is same as that for the above-described method of information processing of the present invention, so that description of which will be omitted.

Paragraphs below will detail specific examples applied with the present invention, referring to the attached drawings.

FIG. 1 shows an exemplary configuration of the recommendation system as one embodiment of the present invention. The recommendation system 1 determines a recommendable target which matches user preference, presents a recommendable target and metadata of the recommendable target which serves as a reason for recommendation to the user, acquires user's evaluations on the recommendable target and the a reason for recommendation, and updates the preference information based on thus acquired user's evaluation.

The recommendable target herein means content, products and services including, for example, programs of television broadcasting and radio broadcasting, music, cinema, books, and game. The metadata which serves as a reason for recommendation of the recommendable target typically means, for a case where the recommendable target is a television program, genre, cast and words contained in the program contents.

The recommendation system 1 includes a recommendable target information database (DB) 11, a preference information database (DB) 12, a recommendable target selecting section 13, a presentation screen generating section 14, a feedback information acquiring section 15, a preference information reflecting section 16, and a user interface 17. The recommendable target information DB 11 has preliminarily recorded therein metadata of recommendable targets. The preference information DB 12 has preliminarily recorded therein preference information indicating the user preference. The recommendable target selecting section 13 selects a recommendable target to be presented to the user. The presentation screen generating section 14 generates a presentation screen on which the selected recommendable target and the reason for recommendation are presented for the user. The feedback information acquiring section 15 acquires the user's evaluations on the recommendable target and metadata of the recommendable target. The preference information reflecting section 16 updates the preference information DB 12 on the basis of the acquired user's evaluations. The user interface 17 includes a display section 18 displaying a presentation screen and an entry section 19 allowing entry by the user operation.

The recommendable target information DB 11 makes management by adding an identification number (ID) to each item of the metadata of the recommendable target. It is to be understood that the recommendable target information DB 11 is suitably added with metadata of new recommendable target.

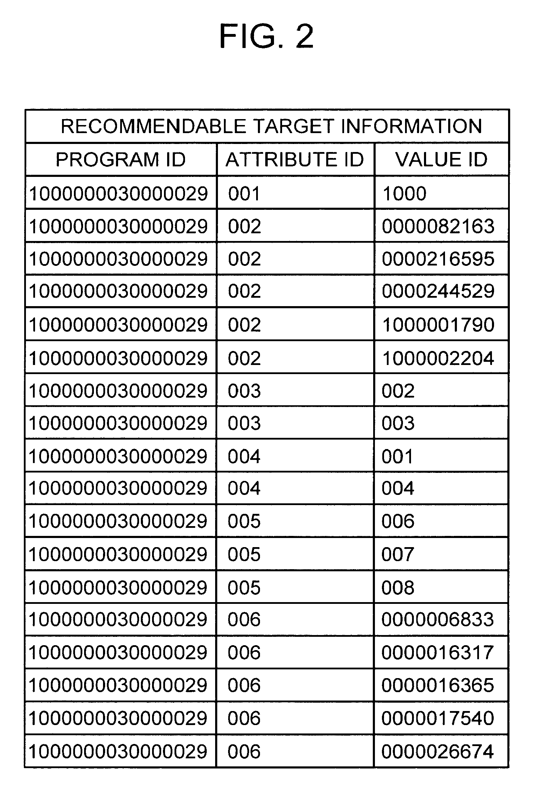

FIG. 2 shows one example of the metadata of the recommendable target recorded in the recommendable target information DB 11.

In the recommendable target information DB 11, attribute IDs indicating types of the metadata (genre, cast, etc.) and value IDs indicating specific contents of the metadata (drama, news, variety and sport for the genre, and Haruko Nogiwa and Takuya Morimura for the cast) are recorded as being correlated with program IDs identifying the recommendable target.

The preference information DB 12 manages the user's preference information by adding it with IDs. The user's preference information recorded in the preference information DB 12 is altered by the preference information reflecting section 16, and is added and updated on the basis of the user's operation history as well.

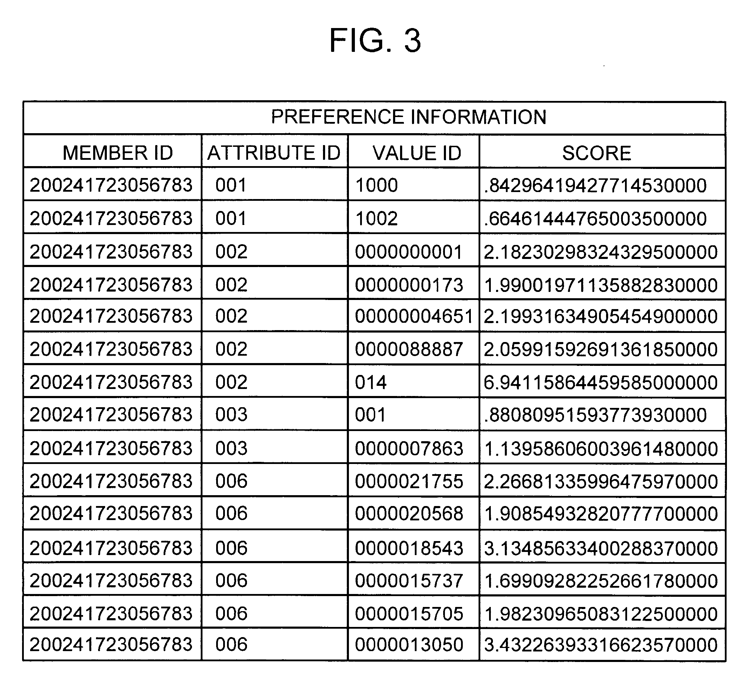

FIG. 3 shows an example of preference information recorded in the preference information DB 12.

In the preference information DB 12, attribute IDs indicating types of the metadata (genre, cast, etc.), value IDs indicating specific contents of the metadata (drama, news, variety and sport for the genre, and Haruko Nogiwa and Takuya Morimura for the cast), and scores are recorded as being correlated with member IDs specifying the user.

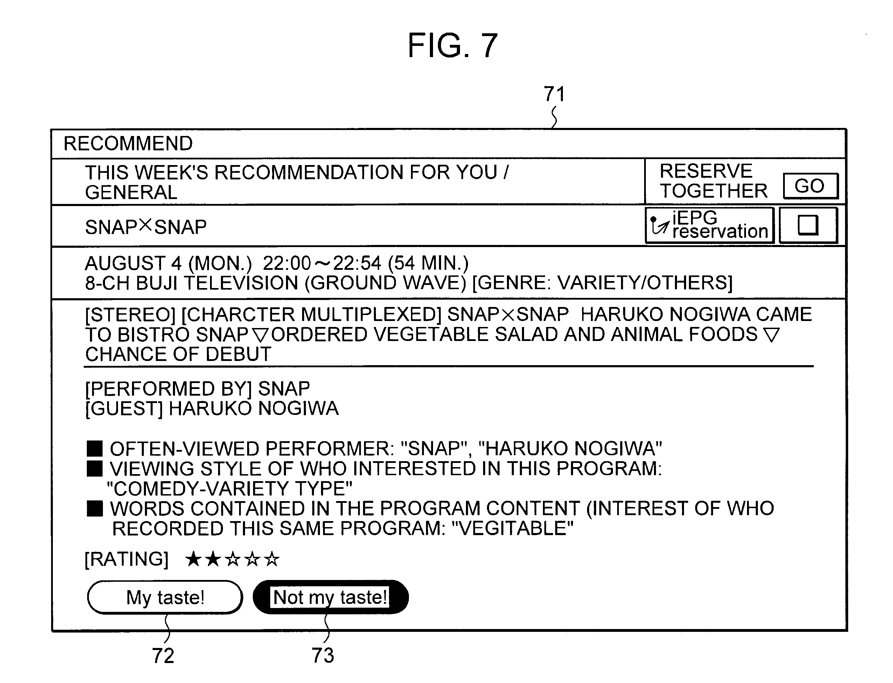

The recommendable target selecting section 13 selects a recommendable target which matches the user preference typically by a matching search between the recommendable target information DB 11 and the preference information DB 12, and output the target to the presentation screen generating section 14. The presentation screen generating section 14 then generates a presentation screen 71, which will be described later referring to FIG. 7, and outputs the target to the display section 18. The feedback information acquiring section 15 acquires user's operation typically effected through a "My taste!" button 72 as in FIG. 7 on the presentation screen 71, and outputs it to the preference information reflecting section 16. The preference information reflecting section 16 updates the preference information recorded in the preference information DB 12, on the basis of the user's operation effected through the presentation screen 71 received from the feedback information acquiring section 15.

The display section 18 displays the presentation screen 71 received from the presentation screen generating section 14, and displays a cursor indicating position of operation by the user as being overlaid on the presentation screen. The entry section 19 allows entry of user's operations such as moving the cursor on the presentation screen, or pressing the button 72 on the presentation screen 71.

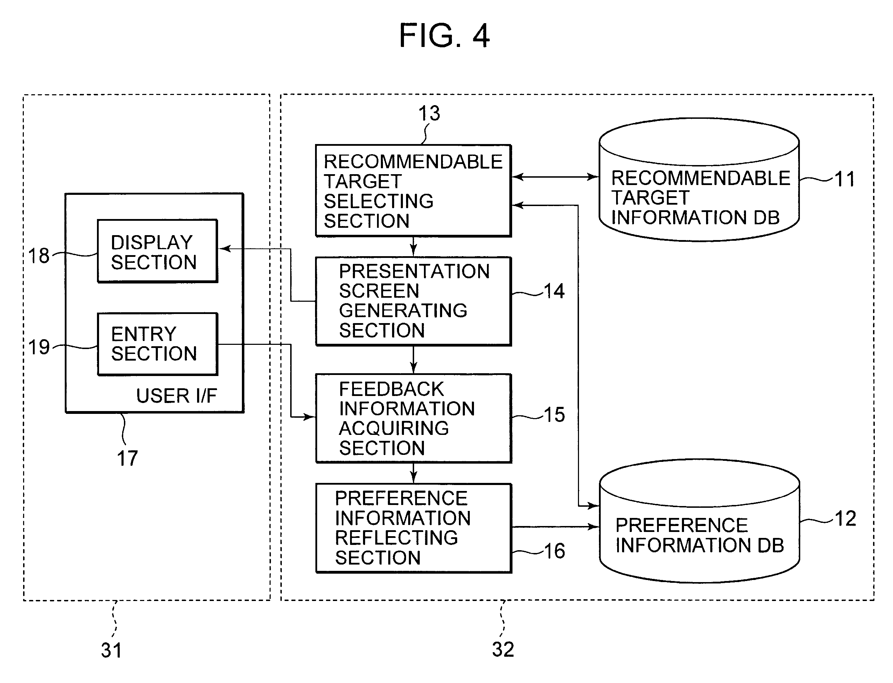

Next, an example of application of the recommendation system 1 shown in FIG. 1 will be explained referring to FIGs. 4 to 6.

FIG. 4 shows an exemplary configuration of a combination, for example, of a server put into service on the Internet, disclosing broadcasting schedule of the television programs, and a user terminal accessible to the server, applied with the recommendation system 1. In this example of application, the recommendable target information DB 11 through the preference information reflecting section 16, out of the constituents of the recommendation system 1, are included in a server 32 on the Internet, and the user interface 17 is included in a user terminal 31 accessible to the server 32.

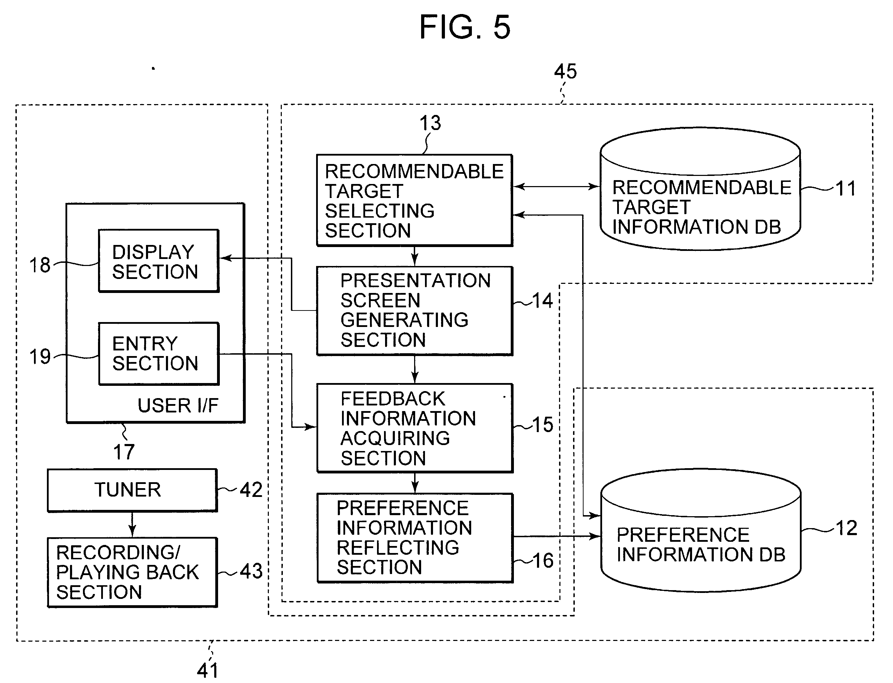

FIG. 5 shows an exemplary configuration of a combination, for example, of a server put into service on the Internet, disclosing broadcasting schedule of the television programs, and a video recorder accessible to the server, applied with the recommendation system 1. In this example of application, the recommendable target information DB 11, and the recommendable target selecting section 13 through the preference information reflecting section 16, out of the constituents of the recommendation system 1, are included in a server 45 on the Internet, and the user interface 17 is included in a video recorder 41. The video recorder 41 has, besides the user interface 17, a tuner 42 which receives television broadcasting, and a recording/playing back section 43 which records and plays back the received television program.

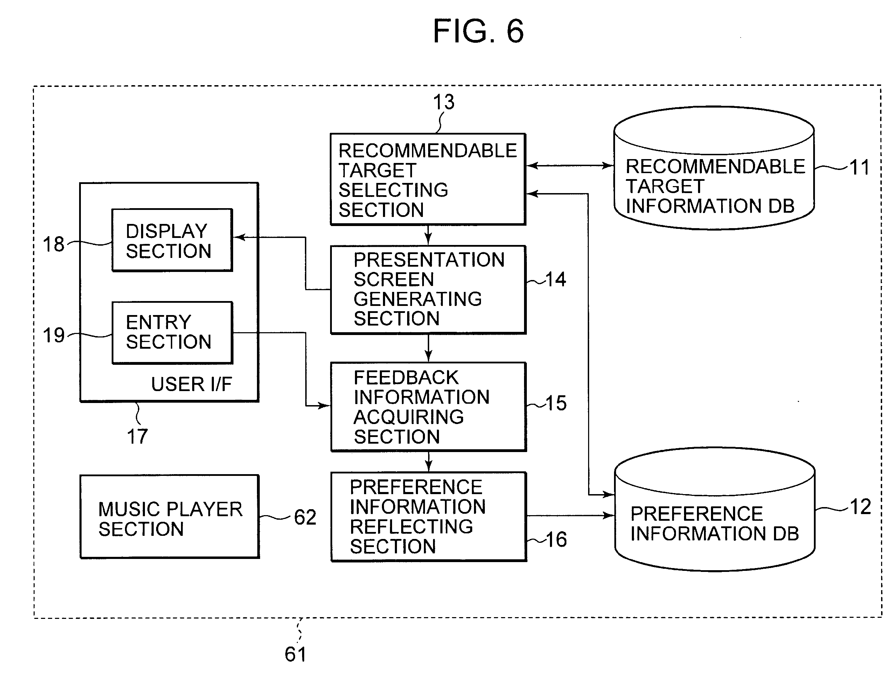

FIG. 6 shows an exemplary configuration of a home music player capable of accumulating music data read out from music CDs or music data and so forth downloaded through the Internet, and reading out thus accumulated music data for reproduction, applied with the recommendation system 1. In this example of application, all constituents of the recommendation system 1 are included in a home music player 61. The home music player 61 has the recommendable target information DB 11 through the preference information reflecting section 16, and also has a music player section 62 acquiring and accumulating music data, or reading out and playing back the music data.

The explanation will be continued below, assuming the television program as the recommendable target, and assuming on-air date/time, broadcasting station, genre, cast, words contained in program content and so forth as the metadata of the television program which serve as the reason for recommendation.

FIG. 7 shows an exemplary display of the presentation screen 71 displayed on the display section 18. The presentation screen 71 displays not only a title (SNAP×SNAP) indicating a television program (recommendable target) recommended on the basis of the user's preference, but also cast (often viewed performer: "SNAP", "Haruko Nogiwa"), genre (viewing style of those who interested in this program: "comedy-variety type"), words contained in the program content (interest of those who recorded this same program: "vegetable") and so forth, as the reason for recommendation.

The user can set a recording reservation for the television program recommended on the presentation screen 71.

The presentation screen 71 also displays the "My taste!" button 72 and a "Not my taste!" button 73, allowing entry of the user's evaluation on the television program (SNAP × SNAP) *per se.* The user can enter the evaluation by the user himself/herself on the recommended television program (SNAPxSNAP), by operating the entry section 19 so as to move the cursor, and selecting the "My taste!" button 72 or the "Not my taste!" button 73. The cursor shown in the drawing points the "Not my taste!" button 73.

When the user further moves the cursor on the presentation screen 71 to point the reason for recommendation displayed thereon, the pop-up allowing entry of the user's evaluation on the reason for recommendation pointed by the cursor is displayed in an overlaid manner. Herein, FIG. 7 shows a case with the cast (often viewed performer: "SNAP", "Haruko Nogiwa"), genre (viewing style of those who interested in this program: "comedy-variety type"), and words contained in the program content (interest of those who recorded this same program: "vegetable").

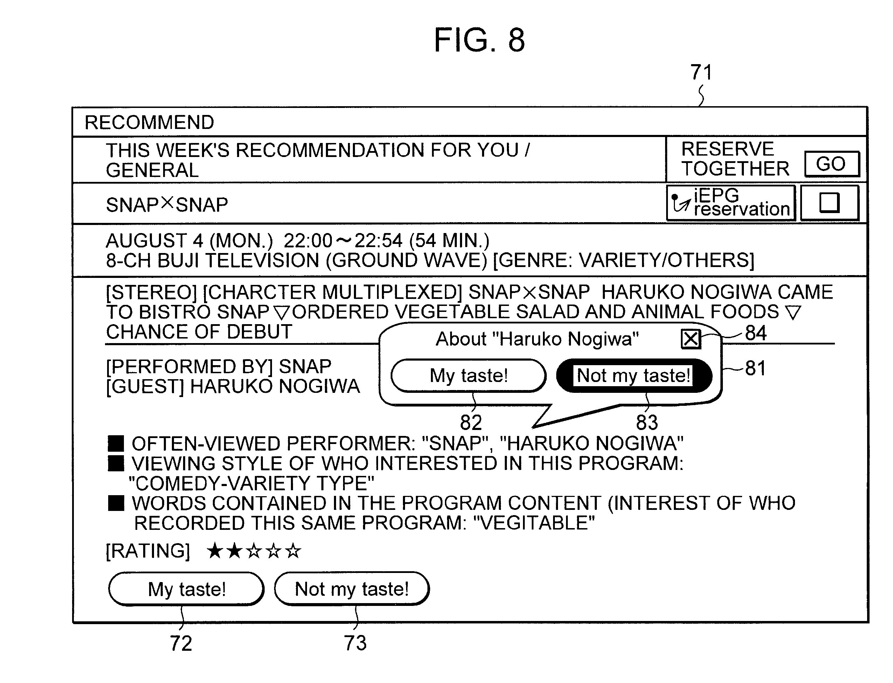

For example, if the performer "Haruko Nogiwa" as the reason for recommendation is pointed by the cursor, a pop-up 81 appears in an overlaid manner, as containing a "My taste!" button 82 and a "Not my taste!" button 83 allowing entry of the user's evaluation on the performer "Haruko Nogiwa" as the reason for recommendation, as shown in FIG. 8. The cursor shown in the drawing points the "Not my taste!" button 83.

The user can enter his or her own evaluation on the performer "Haruko Nogiwa" as the reason for recommendation, by operating the entry section 19 so as to move the cursor, and selecting the "My taste!" button 82 or the "Not my taste!" button 83. The user can also close the pop-up 81 by selecting the close button 84, without entering any evaluation on the performer "Haruko Nogiwa" as the reason for recommendation.

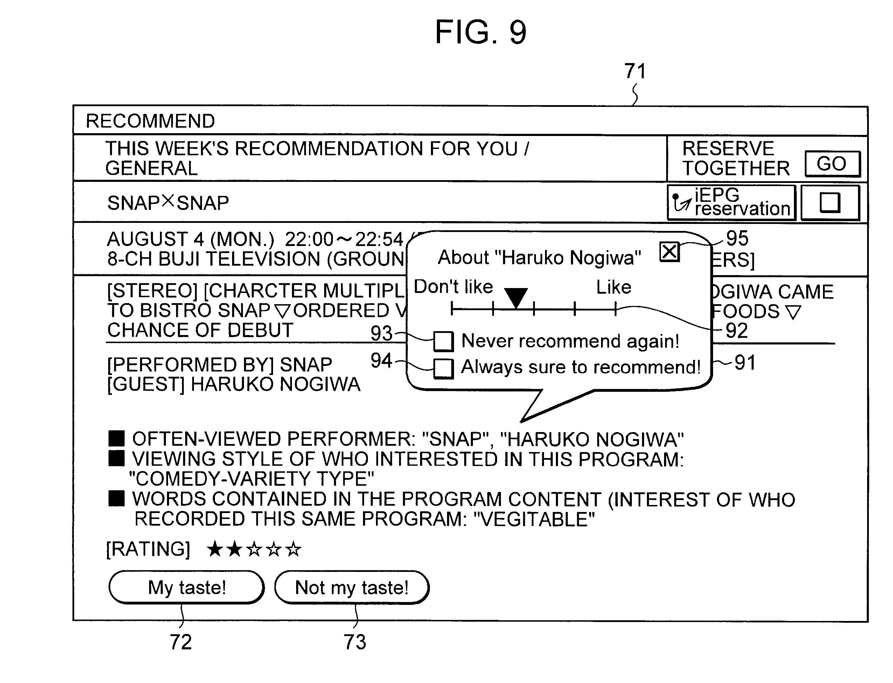

In place of entering the evaluation on the reason for recommendation based on the alternative judgment between the "My taste!" and "Not my taste!", it is also possible to allow the user to enter more detailed evaluation on the reason for recommendation, typically as shown by a pop-up 91 in FIG. 9. The pop-up 91 is provided with a slider 92 allowing entry of an arbitrary value between "Like" and "Don't like" as the evaluation on the performer "Haruko Nogiwa" as the reason for recommendation, and with check boxes 93 and 94 as well.

The user can enter an arbitrary value between "Like" and "Don't like" as the evaluation on the performer "Haruko Nogiwa" as the reason for recommendation, by moving the slider 92. The user can also make setting so that the television program in which "Haruko Nogiwa" takes part will never be recommended again, or contrary, will always be recommended, by selecting the check box 93 or 94. The user can also close the pop-up 91 by selecting the close button 95, without entering any evaluation on the performer "Haruko Nogiwa" as the reason for recommendation.

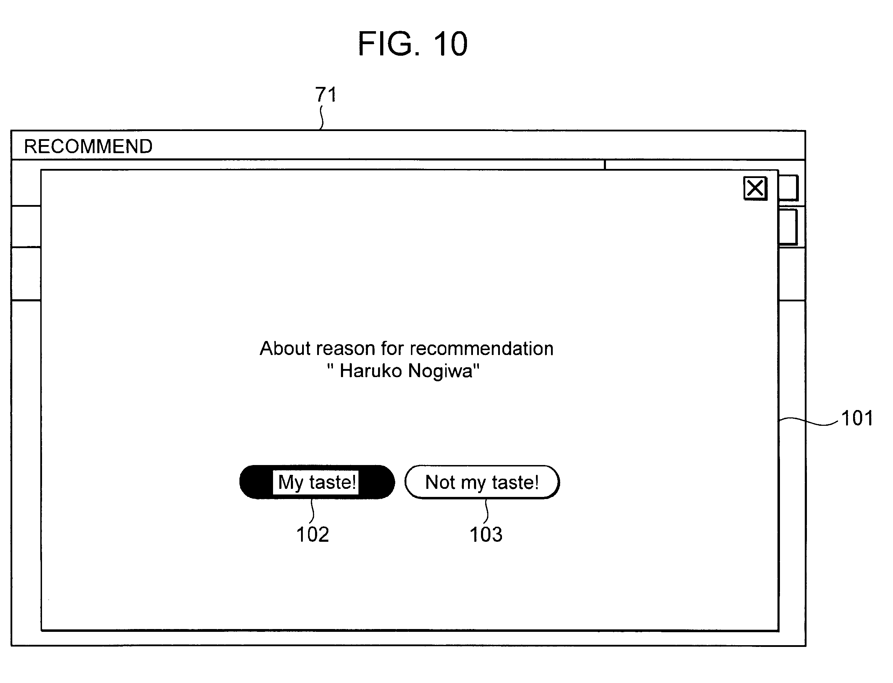

In place of displaying the pop-up 81 shown in FIG. 8 and the pop-up 91 shown in FIG. 9 in an overlaid manner, it is also allowable, typically as shown in FIG. 10, to display a small screen 101 containing a "My taste!" button 102 and a "Not my taste!" button 103 allowing entry of the user's evaluation on the performer "Haruko Nogiwa" as the reason for recommendation, as being overlaid on the presentation screen 71.

In place of selecting the "My taste!" buttons and the "Not my taste!" buttons provided on the pop-ups 81, 91 or on the small selection 101 using the cursor, it is also allowable to use, for example, a remote controller having a "My taste!" button and a "Not my taste!" button provided thereon as the user interface 17, or to use a mouse as the user interface 17 allowing left-click and right-click operations to correspond selection of "My taste!" and "Not my taste!", respectively.

The user's evaluation entered through the presentation screen 71, the pop-up 81, 91 or through the small screen 101 is acquired by the feedback information acquiring section 15, and reflected to the preference information DB 12 by the preference information reflecting section 16.

It is to be noted that the device can also be configured as allowing entry of the user's evaluation not only on the recommendable target and on the reason for recommendation, but also on the metadata (for example, such as on-air day of the week, on-air time, broadcasting station, broadcasting wave and genre displayed on the presentation screen 71) of the recommendable target, television program, in this case, other than the reason for recommendation displayed on the presentation screen 71.

Next, the preference information updating process executed by the recommendation system 1 will be explained referring to the flow chart in FIG. 11. The preference information updating process is started typically when the user gives an instruction of recommending a television program through entering a predetermined operation.

In step S1, the recommendable target selecting section 13 refers to the preference information DB 12 to thereby acquire the user preference information, and in step S2, refers to the recommendable target information DB 11 to thereby select a recommendable television program which matches the user preference information, and output it to the presentation screen generating section 14. In step S3, the presentation screen generating section 14 generates the presentation screen 71 and outputs it to the display section 18. The display section 18 displays the presentation screen 71 received from the presentation screen generating section 14, and displays a cursor indicating position of operation by the user as being overlaid on the presentation screen 71.

In step S5, the user interface 17 judges whether the user's evaluation on the recommendable television program displayed on the presentation screen 71 was entered or not. More specifically, the user's evaluation on the television program is judged as being entered, if the "My taste!" button 72 or the "Not my taste!" button 73 on the presentation screen 71 was operated, and the user's evaluation on the television program is judged as being not entered, if neither the "My taste!" button 72 nor the "Not my taste!" button 73 was operated.

For the case where the user's evaluation on the television program was judged as being not entered, the process advances to step S6. In step S6, the user interface 17 judges whether the reason for recommendation displayed on the presentation screen 71 was selected by moving the cursor. For the case where the displayed reason for recommendation was judged as being selected, the process advances to step S7. In step S7, the display section 18 displays a screen display (the pop-up 81, for example) allowing entry of the user's evaluation on the reason for recommendation.

In step S8, the user interface 17 judges whether the user's evaluation on the reason for recommendation displayed on the pop-up 81 or the like was entered or not. More specifically, the user's evaluation on the reason for recommendation is judged as being entered, if the "My taste!" button 82 or the "Not my taste!" button 83 on the pop-up 81 was operated, and the user's evaluation on the reason for recommendation is judged as being not entered, if neither the "My taste!" button 82 nor the "Not my taste!" button 83 was operated. The user interface 17 is then brought into standby until the user's evaluation on the reason for recommendation is entered. For a case where an instruction of closing the display such as the pop-up 81 is given, that is, the close button 84 is selected, during the standby, the display is closed and the process returns back to step S5. For a case where the user's evaluation on the reason for recommendation was judged as being entered, the process advances to step S9.

In step S9, the feedback information acquiring section 15 acquires the user's operation typically made on the "My taste!" button 82 on the pop-up 81, and output it to the preference information reflecting section 16. The preference information reflecting section 16 updates the preference information recorded in the preference information DB 12, on the basis of the user's operation on the presentation screen 71 received from the feedback information acquiring section 15.

The process of step S9 is executed, after skipping the processes in steps S6 to S8, also when the user's evaluation on the recommendable television program was judged in step S5 as being entered.

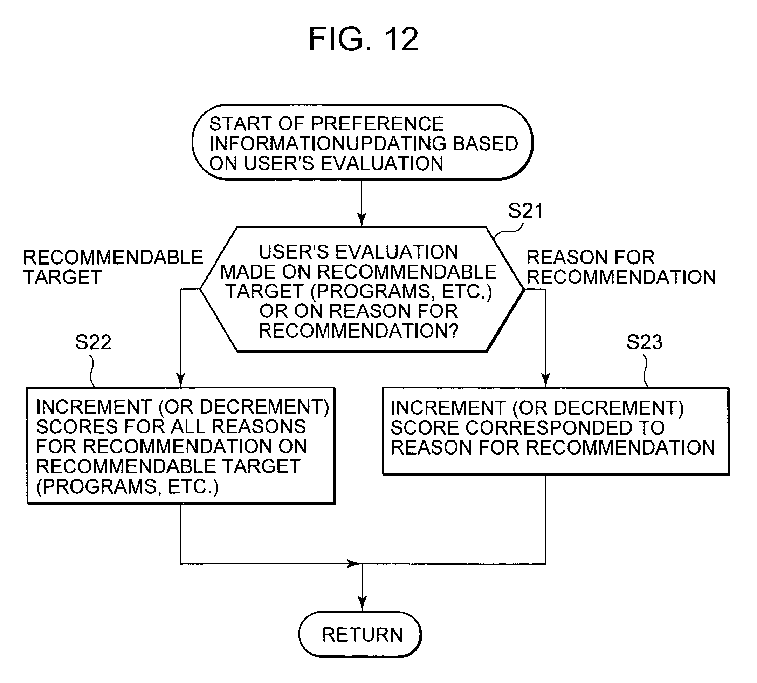

The process in step S9 will be explained referring to the flow chart in FIG. 12.

In step S21, the preference information reflecting section 16 judges on which of the recommendable television program or the reason for recommendation the user's evaluation was made.

In a case where it is judged that the user's evaluation was made on the recommendable television program in step S21, the process advances to step S22. In step S22, the preference information reflecting section 16 alters the scores respectively corresponded to all of the reasons for recommendation with respect to the television program as the recommendable target. For example, if the user's evaluation on the television program (SNAP×SNAP) as the recommendable target was "My taste!", scores respectively corresponded to all of the reasons for recommendation (cast "SNAP", "Haruko Nogiwa", genre "variety ", word "vegetable") with respect to the television program (SNAP×SNAP), out of the preference information of the user in the preference information DB 12, are incremented by predetermined values. On the contrary, if the user's evaluation on the television program (SNAP×SNAP) was "Not my taste!", scores respectively corresponded to all of the reasons for recommendation with respect to the television program (SNAP×SNAP), out of all preference information of the user in the preference information DB 12, are decremented by predetermined values.

On the contrary, in a case where it is judged that the user's evaluation was made on the reason for recommendation in step S21, the process advances to step S23. In step S23, the preference information reflecting section 16 alters the scores corresponded to the causes for recommendation evaluated by the user. For example, if the user's evaluation on the performer "Haruko Nogiwa" as the reason for recommendation was "My taste!", the scores corresponded to the performer "Haruko Nogiwa", out of all preference information of the user in the preference information DB 12, are incremented by predetermined values. On the contrary, when the user's evaluation on the performer "Haruko Nogiwa" as the reason for recommendation was "Not my taste!", the scores corresponded to the performer "Haruko Nogiwa", out of all preference information of the user in the preference information DB 12, are decremented by predetermined values. It is to be noted herein that, for a case where the preference information DB 12 contains no score corresponded to the performer "Haruko Nogiwa", the attribute ID, the value ID and the score corresponded to the performer "Haruko Nogiwa" are newly added thereto.

The reference is now returned back to FIG. 11. In step S10, the user interface 17 judges whether the operation for closing the presentation screen 71 was made by the user or not. In a case where it was judged that no operation for closing the presentation screen 71 took place, the process returns back to step S5, and processes thereafter are repeated. In a case where it was judged that the operation for closing the presentation screen 71 took place, the display section closes the presentation screen 71. The updating operation for the preference information is thus completed.

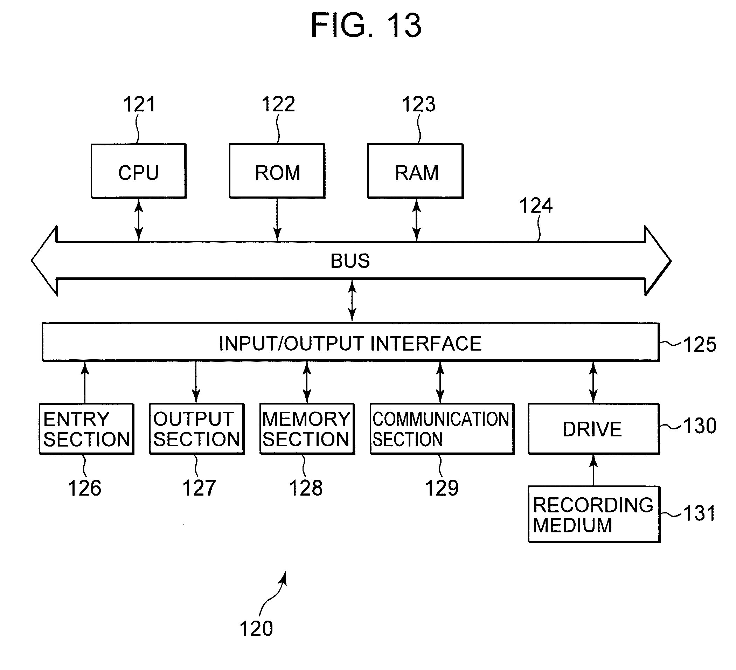

The series of the processes described in the above can be executed on the hardware basis, but also on the software basis. For a case where the series of the processes are executed on the software basis, a program composing the software is installed from a recording medium to a computer incorporated in a dedicated hardware, or typically to a general-purpose computer configured as shown in FIG. 13, capable of executing various functions after being installed with various programs.

The personal computer 120 has a central processing unit (CPU) 121 incorporated therein. The CPU 121 is connected with an I/O interface 125 via a bus 124. The bus 124 is connected with a read only memory (ROM) 122 and a random access memory (RAM) 123.

The I/O interface 125 is connected with an entry section 126 allowing the user to enter operation commands, an output section 127 composed of a display such as a cathode ray tube (CRT) or a liquid crystal display (LCD) displaying operation screens thereon, a memory section 128 typically composed of a hard disk drive storing programs and various data, and a communication section 129 typically include a modem, a local area network (LAN) adapter and so forth, carrying out communication processing via a network represented by the Internet. It is also connected with a drive 130 taking part in reading/writing of data to and from a recording medium 131 such as a magnetic disk including a flexible disk, an optical disc including a compact disc-read only memory (CD-ROM) and a digital versatile disc (DVD), a magneto-optical disc including a mini disc (MD) and a semiconductor memory.

A program allowing the personal computer 120 to execute the series of processing described in the above is supplied to the personal computer 120 as being stored in the recording medium 131, read out by the drive 130, and installed in the hard disk drive incorporated in the memory section 128. The program installed in the memory section 128 is loaded therefrom to the RAM 123 for execution, upon being instructed by a command of the CPU 121 corresponded to the command entered by the user through the entry section 126.

It is to be understood that, in this patent specification, any steps executed in accordance with the program include not only those executed in a time-series manner according to the described order, but also those executed in a parallel or an independent manner rather than being necessarily processed in a time-series manner.

It is also to be understood that, in this patent specification, "system" is a concept expressing the whole apparatus composed of a plurality of devices.

It should be understood by those skilled in the art that various modifications, combinations, sub-combinations and alterations may occur depending on design requirements and other factors insofar as they are within the scope of the appended claims or the equivalents thereof.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An information processing device presenting to a user a recommendable target which matches user preference, comprising:
selection means which selects the recommendable target to be presented to the user, on the basis of preliminarily acquired preference information of the user;
presentation means which presents to the user recommendation information containing the recommendable target selected by the selection means, and features of the recommendable target;
entry means which allows entry of an evaluation by the user on the recommendation information with respect to the recommendable target presented by the presentation means; and
update means which updates the preference information of the user on the basis of the evaluation entered through the entry means corresponding to the recommendation information.

2. The information processing device as claimed in Claim 1, further comprising extraction means which extracts contributive information which contributed to selection made by the selection means, wherein:
the recommendation information contains the contributive information extracted by the extraction means.

3. The information processing device as claimed in Claim 2, wherein:
the extraction means extracts, out of feature information of the recommendable target, an item largely contributed to the selection of the recommendable target by the selection means as the contributive information, and
the update means alters a score of an item corresponded to the contributive information, out of the preference information of the user.

4. The information processing device as claimed in Claim 1, wherein:
the presentation means presents a pop-up allowing entry of the evaluation by the user on the contributive information, when the user selected the contributive information, and
the entry means allows entry of the evaluation by the user on the recommendation information, to the pop-up presented by the presentation means.

5. A method of information processing executed in an information processing device presenting to a user a recommendable target which matches user preference, comprising the steps of:
selecting the recommendable target to be presented to the user, on the basis of preliminarily acquired preference information of the user;
presenting to the user recommendation information containing the recommendable target selected by a processing in the selecting step, and features of the recommendable target;
allowing entry of an evaluation by the user on the recommendation information with respect to the recommendable target presented by a processing in the presenting step; and
updating the preference information of the user on the basis of the evaluation entered through a processing in the allowing entry step, corresponding to the recommendation information.

6. A program presenting a recommendable target which matches user preference to a user, allowing a computer to execute processing,
the processing comprising the steps of:
selecting the recommendable target to be presented to the user, on the basis of preliminarily acquired preference information of the user;
presenting to the user recommendation information containing the recommendable target selected by a processing in the selecting step, and features of the recommendable target;
allowing entry of an evaluation by the user on the recommendation information with respect to the recommendable target presented by a processing in the presenting step; and
updating the preference information of the user based on the evaluation entered through a processing in the allowing entry step, corresponding to the recommendation information.

7. An information processing device presenting a recommendable target which matches user preference to a user, comprising:
a selection unit which selects the recommendable target to be presented to the user, on the basis of preliminarily acquired preference information about the user;
a presentation unit which presents to the user recommendation information containing the recommendable target selected by the selection unit, and features of the recommendable target;
an entry unit which allows entry of an evaluation by the user on the recommendation information with respect to the recommendable target presented by the presentation unit; and
an update unit which updates the preference information of the user on the basis of the evaluation entered through the entry unit corresponding to the recommendation information.
